# EUROPEAN PATENT SPECIFICATION

(11) **EP 4 621 533 B1**
(45) Date of publication and mention of the grant of the patent: **30.09.2026**
(21) Application number: 25163474.7
(22) Date of filing: 13.03.2025
(51) Int. Cl.: G06F 3/01, G02B 27/01, G06T 15/40, G06T 15/20

(54) **TILED LAYER COMPOSITION FOR REMOTE RENDERING**
MOSAIKSCHICHTZUSAMMENSETZUNG FÜR REMOTE-RENDERING
COMPOSITION DE COUCHE CARRELÉE POUR RENDU À DISTANCE

(30) Priority: 21.03.2024 US 202418612739
(43) Date of publication of application: 24.09.2025
(73) Proprietor: Microsoft Technology Licensing, LLC, Redmond, WA 98052 (US)
(72) Inventor: VOSS-WOLFF, CHRISTIAN, Redmond, 98052 (US); BAGAR, FLORIAN, Redmond, 98052 (US)
(74) Representative: CMS Cameron McKenna Nabarro Olswang LLP

(56) References cited:
- US-A1- 2018 276 824
- US-A1- 2023 039 100

## Description

### BACKGROUND

Head mounted devices (HMD), or other wearable devices, are becoming highly popular. These types of devices are able to provide a so-called "extended reality" experience.

The phrase "extended reality" (ER) is an umbrella term that collectively describes various different types of immersive platforms. Such immersive platforms include virtual reality (VR) platforms, mixed reality (MR) platforms, and augmented reality (AR) platforms. The ER system provides a "scene" to a user. As used herein, the term "scene" generally refers to any simulated environment (e.g., three-dimensional (3D) or two-dimensional (2D)) that is displayed by an ER system.

For reference, conventional VR systems create completely immersive experiences by restricting their users' views to only virtual environments. This is often achieved through the use of an HMD that completely blocks any view of the real world. Conventional AR systems create an augmented-reality experience by visually presenting virtual objects that are placed in the real world. Conventional MR systems also create an augmented-reality experience by visually presenting virtual objects that are placed in the real world, and those virtual objects are typically able to be interacted with by the user. Furthermore, virtual objects in the context of MR systems can also interact with real world objects. AR and MR platforms can also be implemented using an HMD. ER systems can also be implemented using laptops, handheld devices, HMDs, and other computing systems.

Unless stated otherwise, the descriptions herein apply equally to all types of ER systems, which include MR systems, VR systems, AR systems, and/or any other similar system capable of displaying virtual content. An ER system can be used to display various different types of information to a user. Some of that information is displayed in the form of a "hologram." As used herein, the term "hologram" generally refers to image content that is displayed by an ER system. In some instances, the hologram can have the appearance of being a 3D object while in other instances the hologram can have the appearance of being a 2D object. In some instances, a hologram can also be implemented in the form of an image displayed to a user.

Continued advances in hardware capabilities and rendering technologies have greatly increased the realism of holograms and scenes displayed to a user within an ER environment. For example, in ER environments, a hologram can be placed within the real world in such a way as to give the impression that the hologram is part of the real world. As a user moves around within the real world, the ER environment automatically updates so that the user is provided with the proper perspective and view of the hologram. This ER environment is often referred to as a computer-generated scene, or simply a "scene."

In such systems, the user's body (specifically the head) can move in real time in relation to the virtual environment. For example, in an ER application, if the user tilts her head in one direction, she will not expect the image or hologram to tilt with them. Ideally, the system will measure the position of the user's head and render images at a fast enough rate to eliminate any jitter or drift in the image position as perceived by the user. However, typical graphics processing units ("GPUs") currently render frames between only 30 to 60 frames per second, depending on the quality and performance of the GPU. This results in a potential delay of 16 to 33 milliseconds between the point in time of when the head position is detected and when the image is actually displayed on the HMD. Additional latency can also be associated with the time that is required to determine the head position and/or delays between the GPU's frame buffer and the final display. The result is a potentially large error between where the user would expect an image and where the image is displayed, leading to user discomfort.

To reduce or eliminate such errors, existing systems apply late stage corrections to adjust the image after it is rendered by the GPU. This process is performed before the pixels are displayed so as to compensate for rotation, translation, and/or magnification due to head movement. This adjustment process is often referred to as "Late State Adjustment," "Late Stage Reprojection," "LSR" or "LSR Adjustments." Hereinafter, this disclosure will use the abbreviation "LSR." Accordingly, there exists a strong need in the field to efficiently improve the LSR operations of systems. US 2018/276824 A1 discloses a method for composing an image for augmented reality using multiple layers.

The subject matter claimed herein is not limited to embodiments that solve any disadvantages or that operate only in environments such as those described above. Rather, this background is only provided to illustrate one exemplary technology area where some embodiments described herein may be practiced.

### BRIEF SUMMARY

In some aspects, the techniques described herein relate to a method for performing tiled composition to intelligently restrict which layers are considered when performing an image composition process, said method including: accessing, for each image layer in a plurality of image layers, a corresponding color image and a corresponding depth image such that multiple color images and multiple depth images are accessed; performing late stage reprojection (LSR) on the plurality of image layers to produce corresponding reprojected color images and corresponding reprojected depth images, wherein the LSR is performed using a correction matrix; using the correction matrix used during performance of the LSR to generate a set of guidance composition meshes that operate to restrict which image layers in the plurality of image layers are considered for a subsequent image composition process, wherein the image layers that are considered for the subsequent image composition process form a set of selected image layers; and using the set of guidance composition meshes to guide performance of the image composition process, wherein guiding the performance of the image composition process includes selecting one or more shaders for use during the image composition process, wherein the image composition process includes composing pixels from a specific image layer included among the set of selected image layers while refraining from composing pixels that are occluded by the composed pixels, and wherein the specific image layer is one that is determined to be closest to a particular user.

In some aspects, the techniques described herein relate to a computer system including: a processor system; and a storage system that stores instructions that are executable by the processor system to cause the computer system to: access, for each image layer in a plurality of image layers, a corresponding color image and a corresponding depth image such that multiple color images and multiple depth images are accessed; perform late stage reprojection (LSR) on the plurality of image layers to produce corresponding reprojected color images and corresponding reprojected depth images, wherein the LSR is performed using a correction matrix; use the correction matrix used during performance of the LSR to generate a set of guidance composition meshes that operate to restrict which image layers in the plurality of image layers are considered for a subsequent image composition process, wherein the image layers that are considered for the subsequent image composition process form a set of selected image layers; and use the set of guidance composition meshes to guide performance of the image composition process, wherein guiding the performance of the image composition process includes selecting one or more shaders for use during the image composition process, wherein the image composition process includes composing pixels from a specific image layer included among the set of selected image layers while refraining from composing pixels that are occluded by the composed pixels, and wherein the specific image layer is one that is determined to be closest to a particular user.

In some aspects, the techniques described herein relate to a head mounted device (HMD) including: a processor system; and a storage system that stores instructions that are executable by the processor system to cause the HMD to: access, for each image layer in a plurality of image layers, a corresponding color image and a corresponding depth image such that multiple color images and multiple depth images are accessed; perform late stage reprojection (LSR) on the plurality of image layers to produce corresponding reprojected color images and corresponding reprojected depth images, wherein the LSR is performed using a correction matrix; use the correction matrix used during performance of the LSR to generate a set of guidance composition meshes that operate to restrict which image layers in the plurality of image layers are considered for a subsequent image composition process, wherein the image layers that are considered for the subsequent image composition process form a set of selected image layers; and use the set of guidance composition meshes to guide performance of the image composition process, wherein guiding the performance of the image composition process includes selecting one or more shaders for use during the image composition process, wherein the image composition process includes composing pixels from a specific image layer included among the set of selected image layers while refraining from composing pixels that are occluded by the composed pixels, and wherein the specific image layer is one that is determined to be closest to a particular user.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Additional features and advantages will be set forth in the description which follows, and in part will be obvious from the description, or may be learned by the practice of the teachings herein. Features and advantages of the invention may be realized and obtained by means of the instruments and combinations particularly pointed out in the appended claims. Features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features can be obtained, a more particular description of the subject matter briefly described above will be rendered by reference to specific embodiments which are illustrated in the appended drawings. Understanding that these drawings depict only typical embodiments and are not therefore to be considered to be limiting in scope, embodiments will be described and explained with additional specificity and detail through the use of the accompanying drawings in which:
Figure 1 illustrates an example computing architecture that may be used to perform intelligent tiling operations.
Figure 2 illustrates a tiled composition process.
Figures 3A and 3B further illustrate the tiled composition process.
Figure 4 illustrates a flowchart of an example method for performing the tiled composition process.
Figure 5 illustrates an example computer system that may be configured to perform any of the disclosed operations.

### DETAILED DESCRIPTION

In remote ER streaming solutions, a powerful remote machine produces several image layers that are streamed over the network to a local low powered HMD (also referred to as an ER system). One reason as to why layers are used is because it may be the case that different types of processing are to be performed on the different layers or different resolutions for the layers may be desired. On the HMD, these layers are late stage reprojected to the HMD's latest location and composed to one final image.

Additional layers are used to improve the quality of the user experience. For example, rendered controller models (e.g., where a "controller" is perhaps an actual physical controller held by a user or perhaps even the user's hands) may be streamed in a separate layer each, instead of being placed in the main layer. Doing so allows for the performance of a dedicated reprojection method for each controller.

It is often the case that controller models require a different type of LSR versus content that is not attached to a controller. That is, 3D content that is attached to a hand or controller may require different types of LSR as compared to content that is locked to the user's physical world. These different requirements constitute one reason ER systems stream multiple different layers.

As a point of clarification, each hologram rendered by the ER system is contained in a single layer. It might be the case, however, that one layer includes multiple holograms. Other types of holograms can be rendered in layers, and these principles equally apply to those types of holograms. For instance, in addition to controllers, hands, and other holograms, a virtual desktop slate can also employ the disclosed principles, particularly because the virtual desktop slate requires very high resolution. Accordingly, in various implementations, the disclosed layering principles are employed so as to accommodate differences in LSR requirements for different holograms.

As another example, traditional 2D application windows may be streamed in a dedicated layer at a higher resolution, thereby improving text readability compared to streaming the same content in a 3D layer. For these and various other reasons, ER systems often operate using layering.

Thus, the framework generally involves sending over multiple layers from the remote system to the HMD, even though those transmissions require additional pixels to be compressed and sent over the network. On the HMD side, historically, the HMD decodes all the layer information. Then, for every pixel of the image, the HMD considers every layer and how far away that layer for a given pixel is and then picks the layer that is closest to the user. The HMD subsequently performs an image composition operation that is based on the color of the closest layer.

As an example, if a virtual desktop slate is the closest layer at a given pixel, the HMD picks the color from the virtual desktop slate. If, however, the 3D scene is closer, the HMD occludes the virtual desktop slate and picks the color from the 3D scene. As a result, traditional techniques read the depth of every single layer that is transmitted for every single pixel in order to do the image composition. Additionally, when the image composition process is executed in a shader GPU program, the shader progressively performs more slowly as new features are added. This reduction in speed occurs because the shader's code becomes larger even if, for a given pixel, those features are not used in the end image result. Thus, traditional techniques were very resource intensive and were generally naïve in their approach.

One problem with the naive approach is that it does not scale well with increasing layer counts. For instance, because the image composition process can consume significant computational resources relative to the available power budget of the HMD, such techniques fail to adequately scale when more layers are used.

The disclosed embodiments present various improvements, advantages, and practical applications over the traditional techniques. In particular, the disclosed embodiments use a tiling approach to process only a minimal set of layers for each screen region, as opposed to processing the full set of layers at every pixel. By performing the disclosed operations, the embodiments are able to significantly speed up the operations of the computer because those operations are made more efficient. As a result, the computer system will be able to output quality images at a much faster rate.

This increased output improves the user's experience with the system because less latency will be introduced into the overall set of operations. Additionally, the embodiments use tiling in an effort to improve the operations of the HMD. Specifically, the embodiments are able to run a different set of features for each tile, where those features are ones that are optimal for that given tile. The end result of performing the disclosed operations beneficially produces the same result as the technique involving per-pixel operations/analysis. Thus, no loss in quality occurs when the disclosed principles are practiced.

### Example Architectures

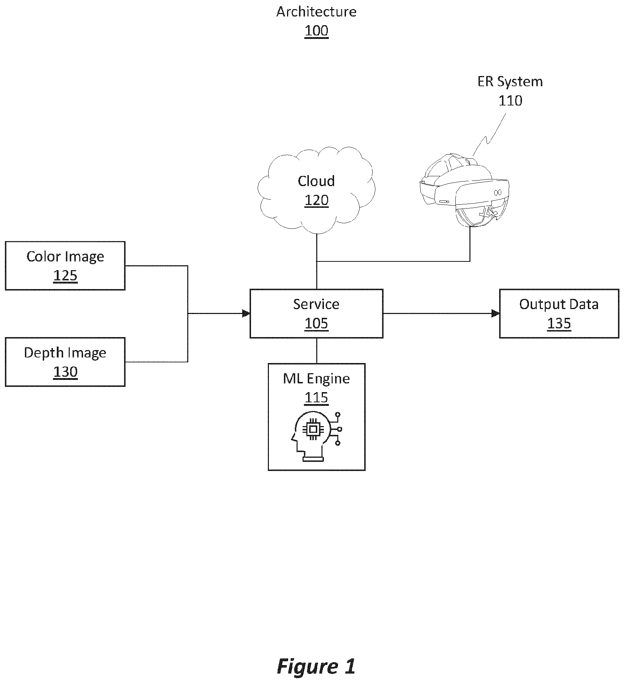

Having just described some of the high level benefits, advantages, and practical applications achieved by the disclosed embodiments, attention will now be directed to Figure 1, which illustrates an example computing architecture 100 that can be used to achieve those benefits.

Architecture 100 includes a service 105, which can be implemented by an ER system 110 comprising an HMD. As used herein, the phrases ER system, HMD, platform, or wearable device can all be used interchangeably and generally refer to a type of system that displays holographic content (i.e. holograms). In some cases, ER system 110 is of a type that allows a user to see various portions of the real world and that also displays virtualized content in the form of holograms. That ability means ER system 110 is able to provide so-called "passthrough images" to the user. It is typically the case that architecture 100 is implemented on an MR or AR system, though it can also be implemented in a VR system.

As used herein, the term "service" refers to an automated program that is tasked with performing different actions based on input. In some cases, service 105 can be a deterministic service that operates fully given a set of inputs and without a randomization factor. In other cases, service 105 can be or can include a machine learning (ML) or artificial intelligence engine, such as ML engine 115. The ML engine 115 enables the service to operate even when faced with a randomization factor.

As used herein, reference to any type of machine learning or artificial intelligence may include any type of machine learning algorithm or device, convolutional neural network(s), multilayer neural network(s), recursive neural network(s), deep neural network(s), decision tree model(s) (e.g., decision trees, random forests, and gradient boosted trees) linear regression model(s), logistic regression model(s), support vector machine(s) ("SVM"), artificial intelligence device(s), or any other type of intelligent computing system. Any amount of training data may be used (and perhaps later refined) to train the machine learning algorithm to dynamically perform the disclosed operations.

In some implementations, service 105 is a cloud service operating in a cloud 120 environment. In some implementations, service 105 is a local service operating on a local device, such as the ER system 110. In some implementations, service 105 is a hybrid service that includes a cloud component operating in the cloud 120 and a local component operating on a local device. These two components can communicate with one another.

Service 105 is generally tasked with improving how an image composition operation is performed by intelligently restricting which layers are considered during that composition. In particular, service 105 determines which layers include forefront content and which layers include content that is occluded by the forefront content. Service 105 is able to cull the occluded content from consideration during the composition process. Doing so effectively reduces the amount of data that is processed during the composition process, thereby streamlining the process and making it significantly faster and more efficient.

To achieve those benefits, service 105 receives or accesses a color image 125 and a depth image 130 for each of potentially many layers that are streamed from a remote central service, such as one operating in the cloud. Thus, multiple color images and depth images may be accessed.

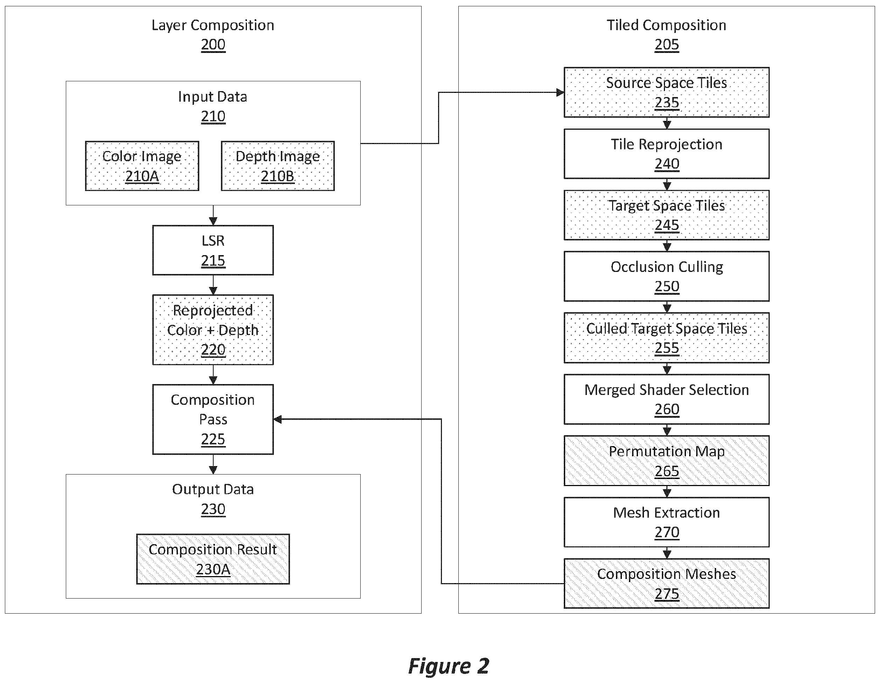

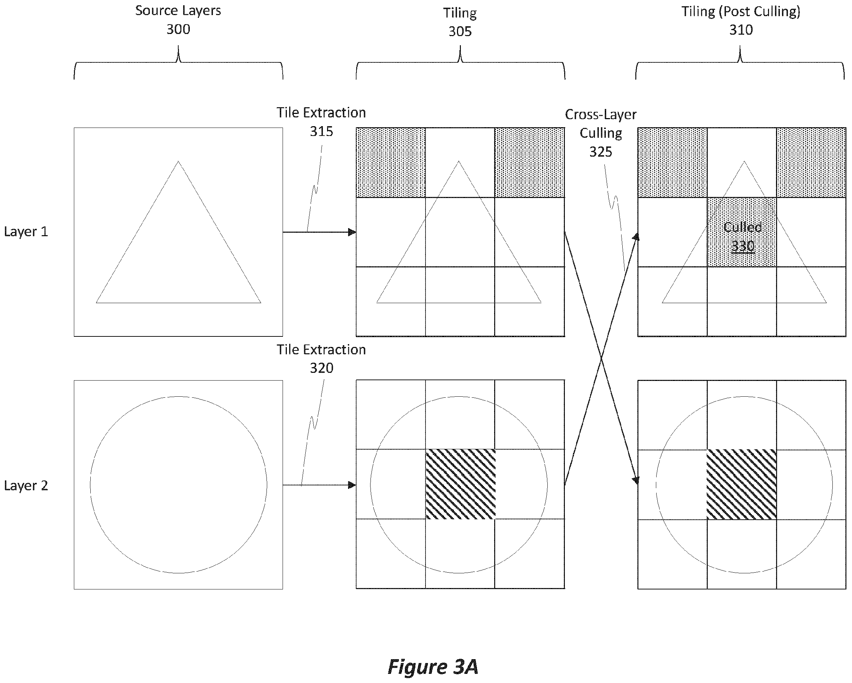

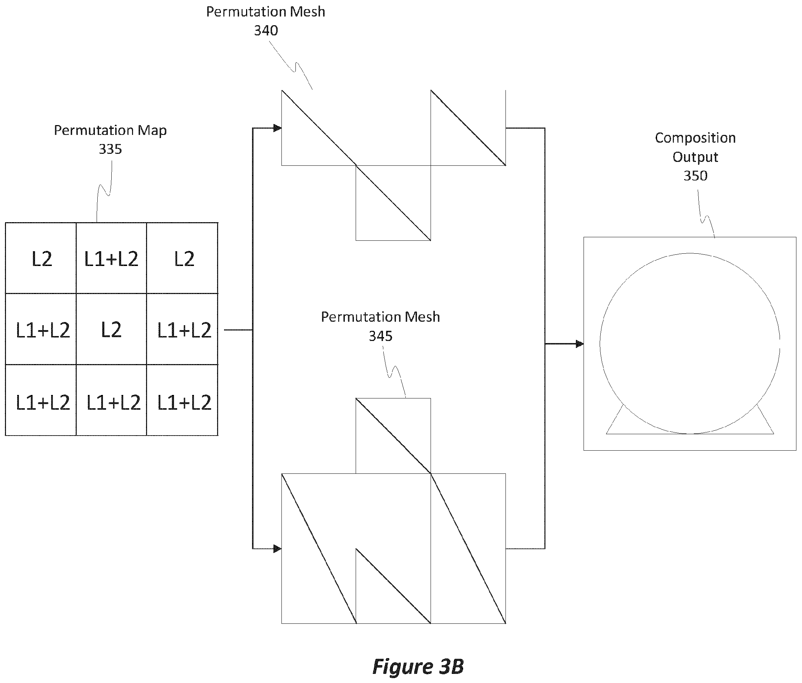

It might be the case that the color image 125 and the depth image 130 are at different resolutions. For instance, the depth image 130 might be at half the resolution of the color image 125. As one specific, non-limiting example, the depth image 130 might have 64x64 pixels while the color image 125 might have 128x128 pixels. As will be described in more detail with respect to Figures 2, 3A, and 3B, service 105 performs various operations to produce output data 135, where the output data 135 is a composed image formed from the merging of multiple layers.

In particular, Figure 2 shows a diagram that gives an overview of the process of tiled composition. Data highlighted in the dotted format exists per-layer, and data highlighted in the diagonal line format is the result of combining multiple layers. Thus, if multiple layers are present, multiple instances of each of the dotted format boxes are used.

Figure 2 shows a combination of a layer composition 200 and a tiled composition 205. Initially, service 105 is given input data 210 comprising a set of images. These images include a color image 210A and a depth image 210B. Color image 210A and depth image 210B correspond to color image 125 and depth image 130 from Figure 1, respectively. These images may have been streamed from the remote service.

The input data 210 comprise color and depth images per each layer, and there may be multiple different layers. On each layer, late stage reprojection (e.g., as shown by LSR 215) is performed separately, thereby producing a set of reprojected color and depth images per layer (e.g., as shown by reprojected color + depth 220). This LSR is followed by a composition pass 225 where, for each pixel, service 105 compares the reprojected depth values of all layers against one another to determine which of the layers is the closest to the user and hence visible for that pixel. The result is output data 230 comprising a composition result 230A. The composition result 230A corresponds to an image that is displayed for the user, where the composition result 230A is based on the layering information. The operations on the lefthand side of Figure 2 correspond to the traditional operations that have been performed.

Figure 2 shows a supplemental column of operations (on the righthand side of Figure 2) that are performed in addition to the operations on the lefthand side. Thus, the disclosed embodiments perform additional operations over those of the traditional layer composition 200 process. This supplemental approach is referred to as tiled composition 205.

With tiled composition 205, service 105 performs the same layer composition 200 process, but additionally makes use of a set of guidance meshes that allow service 105 to restrict the set of layers that will be considered for the composition pass 225 operation. Thus, in contrast to the traditional layer composition 200 approach in which the reprojected depth values of all layers were compared against one another for each pixel in each layer, the disclosed embodiments use the guidance meshes to intelligently reduce the number of layers that are used during the composition pass 225. These guidance meshes are produced by the process described below and illustrated in the righthand column of Figure 2.

Initially, service 105 performs a source tile extraction operation to produce source space tiles 235. In other words, the screen area of the HMD is tiled.

Service 105 splits each layer into a set of non-overlapping tiles, where each tile consists of a number of pixels (e.g. 32x32). For each of these tiles (aka "source tiles"), service 105 scans the depth pixels assigned to each of those tiles and determines both the minimum and maximum depth that is present for the scanned tile.

Service 105 also determines the content coverage for the tile. The content coverage, in some embodiments, includes a "no coverage" indication (e.g., none of the pixels have any content in this layer), a "full coverage" indication (e.g., all pixels have content in this layer), or a "partial coverage" indication (e.g., some but not all pixels have content in this layer). Tiles that are marked with "no coverage" are not sampled during the composition pass 225.

Service 105 then performs a tile reprojection 240 operation. Because the extracted coverage information is expressed in the source camera pose of each layer, but the composition process occurs after LSR, service 105 is tasked with performing the equivalent process of LSR in the tile space as well.

Tile reprojection 240 is performed by conservatively reprojecting each tile, based on that tile's minimum and maximum depth values that were previously obtained, using the same reprojection matrix that was applied during the per pixel LSR stage for every layer (e.g., during LSR 215). This per-tile reprojection results in a set of target space tiles 245 for each layer, where the coverage information as well as the minimum and maximum depths are expressed in the target camera's pose.

By way of further clarification, the HMD display image is configured as tiles, and these tiles are referred to above as the target space tiles 245. As will be described in more detail later, operations occur in two different spaces. For instance, tiling occurs for the target space, which is effectively breaking the display resolution into the various tiles. Tiling also occurs for the layers (i.e. source based tiling).

Another way to frame the above statement is that the source tiling space is bound to the remote pose of the HMD (i.e. the remote rendered image that has been generated), and the target tile space is bound to the target pose that LSR is to achieve. It should also be noted how whatever tiling approach is performed on the depth image is also applied on the color image, or vice versa.

The embodiments generate a number of tiles per layer. Now, the determination as to how many tiles are to be generated is a tradeoff between the performance gains that can be achieved from specializing what is run on a tile and the overhead with processing those tiles. For instance, if the tiles become quite small, then the process of rendering the tiles has significant overhead.

As one extreme example, if one tile comprised one pixel, the HMD would create millions of tiles, and the process of creating all of these tiles would take the entire processing budget. As a result, the determination regarding the number of tiles is chosen heuristically based on the device's characteristics and resource budget. Typically, the size of the tile is selected so as to have at least 1,000 pixels. In some cases, the size of the tile is based on the warp size of the GPU architecture. In any event, each layer is subjected to tiling.

Service 105 then performs an occlusion culling 250 operation. Here, for each tile, if the tile has full content coverage in the target camera pose, that tile can be considered as a potential occluder for any tiles that are behind it. By comparing the depth range of each potentially occluding tile against the depth range of the corresponding tiles in other layers, service 105 can mark tiles as culled if they are fully hidden. This optimization can significantly reduce the number of pixels that need to be sampled during the composition pass 225. The result is a set of culled target space tiles 255.

Service 105 then performs shader selection, as shown by merged shader selection 260. At this stage, service 105 merges information across layers to create a set of screen tiles, where each of these tiles contains information about the set of layers that are potentially visible. Each set of tiles corresponds to a unique shader program permutation, and each unique shader program permutation is optimized to sample from and compose only the given set of tiles. These permutations are stored in a database that can be precompiled or generated on the fly as needed. The permutations are merged together into a single permutation map 265.

Service 105 then performs a mesh extraction 270 operation in which multiple guidance composition meshes are extracted from the permutation map 265. To use the actual shader program permutations for rendering, service 105 converts the sets of tiles into the guidance composition meshes (e.g., as shown by composition meshes 275) that can be rendered together with a shader program (e.g., during composition pass 225) to produce the composition result 230A. Finally, instead of running a shader program that allows sampling and composing all layers at the full screen resolution, service 105 renders each extracted guidance composition mesh with a different shader program. Stated differently, the guidance composition meshes are then used to render only specific sub-feature combinations of the image composition on subsets of the screen.

With the classical layer composition 200, that process would run the worst case shader program on the entire screen. In other words, the classical layer composition uses the shader program that supports every single feature because the HMD does not know what is needed for a particular pixel. That worst case scenario is avoided with the disclosed tiled composition 205 approach. That is, the disclosed embodiments use the meshes that are obtained as the output of the tiled composition 205 process to guide which shader program to run on which screen region. Stated differently, the resulting guidance composition meshes 275 of Figure 2 are used to guide the composition pass 225, particularly in selecting which shader to use during the composition pass 225. Thus, by performing these additional operations (i.e. those on the righthand column of Figure 2), the embodiments are able to speed up the overall composition process because the embodiments are able to eliminate large amounts of data that were previously processed by the traditional approach.

Figures 3A and 3B illustrate further examples of the above processes. In particular, Figures 3A and 3B show diagrams illustrating the above processes with an example of 2 layers, using a total of 3x3 tiles for simplicity. In an actual implementation, the number of tiles would be significantly higher to provide for more optimization opportunities, and a larger number of layers would be typically employed.

Figure 3A shows various source layers 300, tiling 305, and a post culling tiling 310 scenarios for two layers (e.g., layer 1 and layer 2). Layer 1 contains a triangular object, and layer 2 contains a circular object as example content.

In this example, layer 2 is closer to the camera than layer 1, so the triangular object is mostly occluded by the circular object. In a classical layer composition pass, the computational work to sample from the layer 1 image is performed at every pixel, even though the object from layer 1 contributes only a small proportion to the final result.

The source tiling step allows the embodiments to recognize that two tiles of layer 1 contain no content, as shown by the tile extraction step 315 and as shown by the two tiles having a dotted pattern in the central section of Figure 3A. Those two dotted-pattern tiles reflect no content in those tiles for layer 1 (i.e. they are "no coverage" tiles in the target space because no pixel in any of those two tiles has any coverage/content).

The other tiles for layer 1 have pixels that are outside of the triangle and pixels that are inside the triangle. Thus, these tiles can be marked as "partial coverage" in the target space.

A tile extraction 320 operation is also performed on layer 2. For the center tile of layer 2 (i.e. the tile having the diagonal lines), that tile can be marked as "full coverage" in the target space because every pixel in that tile has some content from the circle.

If a tile does have content, the embodiments obtain the minimum and maximum depths for that tile, and the embodiments effectively create a bounding box that reflects the 2D bounds of the tile based on that tile's location. The embodiments can take this bounding box and reproject it (i.e. reproject the tile), as a whole, into a new camera position post-LSR (LSR is a per-pixel operation whereas this reprojection is a per-tile reprojection). It should also be noted how the same correction matrices that are used for the per-pixel LSR are also applied to the entire bounding box (i.e. the entire tile) as a part of this reprojection. Thus, the embodiments perform a per-tile reprojection. Notably, the amount of work for performing this reprojection on the entire layer is minimal because that reprojection is performed using a coarse granularity (i.e. a tile-level granularity). If a tile is marked as no coverage, the embodiments refrain from performing this per-tile reprojection for that tile.

It should also be noted how other data can be included with the tiles as well. For instance, if an alpha channel is transmitted, it is possible to distill that alpha channel into a single tile to reflect whether that alpha is fully opaque, transparent, or partially transparent. In effect, any feature that is associated with a pixel can be distilled into a tile feature provided that the feature is beneficial in the later composition operation. Generally, the embodiments are tasked with determining which features are necessary for a given layer (and tile) to perform a proper composition.

The occlusion culling step (e.g., shown as the cross-layer culling 325) eliminates another tile from layer 1 (as shown by culled 330). This elimination is possible because the center tile of layer 2 (i.e. the forefront layer/tile) fully covers the center tile of layer 1. Thus, the content from the center tile in layer 1 can be ignored/culled during composition.

Figure 3B shows the resulting permutation map 335, which effectively lists all of the features that are to be considered as a part of the composition. Permutation map 335 includes two unique permutations ("L2" and "L1+L2"), although in principle any layer combination is possible. The permutation meshes 340 and 345 (aka "guidance composition meshes") are extracted from the permutation map 335. For instance, permutation mesh 340 (aka "guidance composition mesh") is the extracted mesh for the "L2" permutation, and the permutation mesh 345 is the extracted mesh for the "L1+L2" permutation.

Service 105 then uses the GPU to render the layer 2 mesh (e.g., the permutation mesh 340) with the layer 2 shader program permutation (which may be selected from a shader permutation database). Service 105 also uses the GPU to render the layer 1 + layer 2 mesh (e.g., the permutation mesh 345) with the layer 1 + layer 2 shader program permutation. These renderings are performed to generate the composition output 350, which is a composed image that may be displayed to the user.

### Example Methods

The following discussion now refers to a number of methods and method acts that may be performed. Although the method acts may be discussed in a certain order or illustrated in a flow chart as occurring in a particular order, no particular ordering is required unless specifically stated, or required because an act is dependent on another act being completed prior to the act being performed.

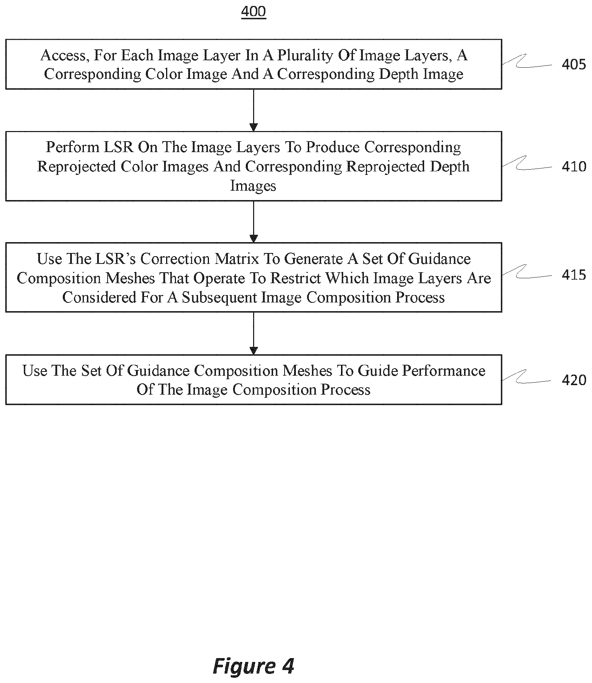

Attention will now be directed to Figure 4, which illustrates a flowchart of an example method 400 for performing tiled composition to intelligently restrict which layers are considered when performing an image composition process (e.g., composition pass 225 of Figure 2). Method 400 may be performed within architecture 100 of Figure 1; further, method 400 may be performed by service 105 and/or by the ER system 110 (e.g., an HMD).

Method 400 includes an act (act 405) of accessing, for each image layer in a plurality of image layers, a corresponding color image and a corresponding depth image. As a result, multiple color images and multiple depth images are accessed. Optionally, the plurality of image layers may be received over a network connection from a cloud service.

In some cases, resolutions of the multiple color images are different than resolutions of the multiple depth images. For instance, a resolution of a particular depth image may be half the resolution of a particular color image.

Act 410 includes performing late stage reprojection (LSR) on the plurality of image layers to produce corresponding reprojected color images and corresponding reprojected depth images. The LSR is performed using a correction matrix. This reprojection is illustrated as LSR 215 in Figure 2.

Act 415 includes using the correction matrix used during performance of the LSR to generate a set of guidance composition meshes, such as those shown in Figure 2 as the composition meshes 275. These guidance composition meshes are structured in a manner so as to restrict which image layers in the plurality of image layers are considered for a subsequent image composition process (e.g., composition pass 225). Notably, the image layers that are considered for the subsequent image composition process form a set of selected image layers.

In some embodiments, the process of generating the set of guidance composition meshes that operate to restrict which image layers in the plurality of image layers are considered for the subsequent image composition process includes performing a source tile extraction operation. This source tile extraction operation produces a set of source space tiles (e.g., source space tiles 235). Also, the source tile extraction operation includes splitting each image layer of the plurality of image layers into a set of non-overlapping tiles.

Optionally, the source tile extraction operation may further include scanning depth pixels of the depth images assigned to each of the non-overlapping tiles and then determining minimum and maximum depths for each of those tiles. The source tile extraction operation may further include determining a content coverage for the pixels in each of the non-overlapping tiles. As some examples, the content coverage may include a "full coverage" indication, a "partial coverage" indication, or a "no coverage" indication.

Other data can be included with the tiles as well. As one example, if an alpha channel is transmitted, it is possible to distill that alpha channel into a single tile to reflect whether that alpha is fully opaque, transparent, or partially transparent. Any other feature that is associated with a pixel can also be distilled into a tile feature provided that the feature is beneficial in the later composition operation.

In some scenarios, the set of non-overlapping tiles are reprojected (e.g., as shown by tile reprojection 240 in Figure 2) using the same correction matrix that was used during performance of the LSR (e.g., LSR 215). This reprojection is performed by reprojecting each tile in the set of non-overlapping tiles based on that tile's minimum and maximum depths and is performed using the correction matrix.

In some scenarios, occlusion culling (e.g., occlusion culling 250 in Figure 2) is performed on the set of non-overlapping tiles. This culling is performed by determining whether a particular tile in the set of non-overlapping tiles is a potential occluder for other tiles that are behind that particular tile (i.e. have depth values that are greater in value and thus placed at a "backward" for "background" position as opposed to a "foreground" position). For tiles that are fully occluded by the particular tile, those occluded tiles are culled (thus producing culled target space tiles 255) by removing them from consideration during the image composition process. That is, the culled tiles are not considered during the subsequent operations; rather, only the tiles that are determined to include visible content will be considered.

Act 420 then includes using the set of guidance composition meshes to guide performance of the image composition process (e.g., the composition pass 225 of Figure 2). Guiding the performance of the image composition process includes selecting one or more shaders for use during the image composition process. The image composition process also includes composing pixels from a specific image layer (included among the set of selected image layers) while refraining from composing pixels that are occluded by the composed pixels. Notably, the specific image layer is one that is determined to be closest to the user wearing the HMD.

In some implementations, the method further includes merging information across one or more of the image layers to create a set of screen tiles. Each of the screen tile includes information about the layers that are potentially visible. Furthermore, each layer that is potentially visible corresponds to a corresponding shader program permutation, and each corresponding shader program permutation is optimized to sample only from those layers that are potentially visible. The selection process may further include merging the shader program permutations together into a single permutation map (e.g., as shown by permutation map 265 in Figure 2).

Optionally, method 400 may include a mesh extraction (e.g., mesh extraction 270), which includes extracting multiple guidance composition meshes from the single permutation map (e.g., as shown by composition meshes 275). The multiple guidance composition meshes constitute the set of guidance composition meshes mentioned earlier. The embodiments may then use the multiple guidance composition meshes during the image composition process to compose the pixels from the specific image layer that is determined to be closest to the user, and the embodiments may refrain from composing the pixels that are occluded by the composed pixels.

In some scenarios, the image composition process generates a hologram. Optionally, this hologram may include a virtual desktop slate or any other type of hologram.

### Example Computer / Computer systems

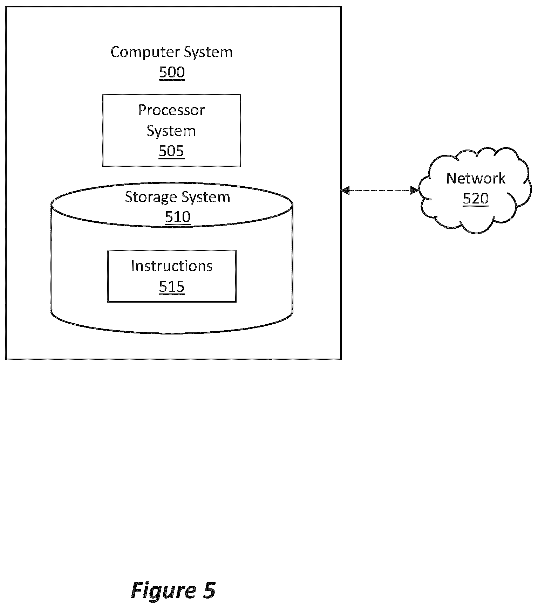

Attention will now be directed to Figure 5 which illustrates an example computer system 500 that may include and/or be used to perform any of the operations described herein. Computer system 500 may take various different forms. For example, computer system 500 may be embodied as a tablet, a desktop, a laptop, a mobile device, or a standalone device, such as those described throughout this disclosure. Computer system 500 may also be a distributed system that includes one or more connected computing components/devices that are in communication with computer system 500. Computer system 500 can be implemented as the ER system 110 of Figure 1. Also, computer system 500 can implement service 105.

In its most basic configuration, computer system 500 includes various different components. Figure 5 shows that computer system 500 includes a processor system 505 that includes one or more processor(s) (aka a "hardware processing unit") and a storage system 510.

Regarding the processor(s) of the processor system 505, it will be appreciated that the functionality described herein can be performed, at least in part, by one or more hardware logic components (e.g., the processor(s)). For example, and without limitation, illustrative types of hardware logic components/processors that can be used include Field-Programmable Gate Arrays ("FPGA"), Program-Specific or Application-Specific Integrated Circuits ("ASIC"), Program-Specific Standard Products ("ASSP"), System-On-A-Chip Systems ("SOC"), Complex Programmable Logic Devices ("CPLD"), Central Processing Units ("CPU"), Graphical Processing Units ("GPU"), or any other type of programmable hardware.

As used herein, the terms "executable module," "executable component," "component," "module," "service," or "engine" can refer to hardware processing units or to software objects, routines, or methods that may be executed on computer system 500. The different components, modules, engines, and services described herein may be implemented as objects or processors that execute on computer system 500 (e.g. as separate threads).

Storage system 510 may be physical system memory, which may be volatile, non-volatile, or some combination of the two. The term "memory" may also be used herein to refer to non-volatile mass storage such as physical storage media. If computer system 500 is distributed, the processing, memory, and/or storage capability may be distributed as well.

Storage system 510 is shown as including executable instructions 515. The executable instructions 515 represent instructions that are executable by the processor(s) of computer system 500 to perform the disclosed operations, such as those described in the various methods.

The disclosed embodiments may comprise or utilize a special-purpose or general-purpose computer including computer hardware, such as, for example, one or more processors and system memory, as discussed in greater detail below. Embodiments also include physical and other computer-readable media for carrying or storing computer-executable instructions and/or data structures. Such computer-readable media can be any available media that can be accessed by a general-purpose or special-purpose computer system. Computer-readable media that store computer-executable instructions in the form of data are "physical computer storage media" or a "hardware storage device." Furthermore, computer-readable storage media, which includes physical computer storage media and hardware storage devices, exclude signals, carrier waves, and propagating signals. On the other hand, computer-readable media that carry computer-executable instructions are "transmission media" and include signals, carrier waves, and propagating signals. Thus, by way of example and not limitation, the current embodiments can comprise at least two distinctly different kinds of computer-readable media: computer storage media and transmission media.

Computer storage media (aka "hardware storage device") are computer-readable hardware storage devices, such as RAM, ROM, EEPROM, CD-ROM, solid state drives ("SSD") that are based on RAM, Flash memory, phase-change memory ("PCM"), or other types of memory, or other optical disk storage, magnetic disk storage or other magnetic storage devices, or any other medium that can be used to store desired program code means in the form of computer-executable instructions, data, or data structures and that can be accessed by a general-purpose or special-purpose computer.

Computer system 500 may also be connected (via a wired or wireless connection) to external sensors (e.g., one or more remote cameras) or devices via a network 520. For example, computer system 500 can communicate with any number devices or cloud services to obtain or process data. In some cases, network 520 may itself be a cloud network. Furthermore, computer system 500 may also be connected through one or more wired or wireless networks to remote/separate computer systems(s) that are configured to perform any of the processing described with regard to computer system 500.

A "network," like network 520, is defined as one or more data links and/or data switches that enable the transport of electronic data between computer systems, modules, and/or other electronic devices. When information is transferred, or provided, over a network (either hardwired, wireless, or a combination of hardwired and wireless) to a computer, the computer properly views the connection as a transmission medium. Computer system 500 will include one or more communication channels that are used to communicate with the network 520. Transmissions media include a network that can be used to carry data or desired program code means in the form of computer-executable instructions or in the form of data structures. Further, these computer-executable instructions can be accessed by a general-purpose or special-purpose computer. Combinations of the above should also be included within the scope of computer-readable media.

Upon reaching various computer system components, program code means in the form of computer-executable instructions or data structures can be transferred automatically from transmission media to computer storage media (or vice versa). For example, computer-executable instructions or data structures received over a network or data link can be buffered in RAM within a network interface module (e.g., a network interface card or "NIC") and then eventually transferred to computer system RAM and/or to less volatile computer storage media at a computer system. Thus, it should be understood that computer storage media can be included in computer system components that also (or even primarily) utilize transmission media.

Computer-executable (or computer-interpretable) instructions comprise, for example, instructions that cause a general-purpose computer, special-purpose computer, or special-purpose processing device to perform a certain function or group of functions. The computer-executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the embodiments may be practiced in network computing environments with many types of computer system configurations, including personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, and the like. The embodiments may also be practiced in distributed system environments where local and remote computer systems that are linked (either by hardwired data links, wireless data links, or by a combination of hardwired and wireless data links) through a network each perform tasks (e.g. cloud computing, cloud services and the like). In a distributed system environment, program modules may be located in both local and remote memory storage devices.

The present invention may be embodied in other specific forms without departing from its characteristics. The described embodiments are to be considered in all respects only as illustrative and not restrictive. The scope of the invention is, therefore, indicated by the appended claims rather than by the foregoing description.

## Claims

1. A method (400) for performing tiled composition to intelligently restrict which layers are considered when performing an image composition process, said method comprising:
accessing (405), for each image layer in a plurality of image layers, a corresponding color image (125) and a corresponding depth image (130) such that multiple color images and multiple depth images are accessed;
performing (410) late stage reprojection 'LSR' on the plurality of image layers to produce corresponding reprojected color images and corresponding reprojected depth images (220), wherein the LSR is performed using a correction matrix;
using (415) the correction matrix used during performance of the LSR to generate a set of guidance composition meshes that operate to restrict which image layers in the plurality of image layers are considered for a subsequent image composition process (225), wherein the image layers that are considered for the subsequent image composition process form a set of selected image layers; and
using (420) the set of guidance composition meshes to guide performance of the image composition process, wherein guiding the performance of the image composition process includes selecting one or more shaders for use during the image composition process, wherein the image composition process includes composing pixels from a specific image layer included among the set of selected image layers while refraining from composing pixels that are occluded by the composed pixels, and wherein the specific image layer is one that is determined to be closest to a particular user.

2. The method of claim 1, wherein resolutions of the multiple color images are different than resolutions of the multiple depth images.

3. The method of claim 2, wherein a resolution of a particular depth image is half a resolution of a particular color image.

4. The method of any one of the preceding claims, wherein generating the set of guidance composition meshes that operate to restrict which image layers in the plurality of image layers are considered for the subsequent image composition process includes performing a source tile extraction operation that produces a set of source space tiles, wherein said source tile extraction operation includes splitting each image layer of the plurality of image layers into a set of non-overlapping tiles.

5. The method of claim 4, wherein the source tile extraction operation further includes scanning depth pixels of the depth images assigned to each of the non-overlapping tiles and determining a minimum depth and a maximum depth for said each non-overlapping tile.

6. The method of claim 5, wherein the source tile extraction operation further includes determining a content coverage for pixels in each of the non-overlapping tiles.

7. The method of claim 6, wherein the set of non-overlapping tiles are reprojected using the correction matrix used during performance of the LSR, and wherein said reprojection is performed by reprojecting each tile in the set of non-overlapping tiles based on that tile's minimum depth and maximum depth using the correction matrix.

8. The method of claim 7, wherein the method further includes:
performing occlusion culling on the set of non-overlapping tiles by determining whether a particular tile in the set of non-overlapping tiles is a potential occluder for other tiles that are behind said particular tile, wherein, for tiles that are fully occluded by the particular tile, those occluded tiles are culled by removing them from consideration during the image composition process.

9. The method of claim 8, wherein the method further includes:
merging information across one or more of the image layers to create a set of screen tiles, wherein each of the screen tiles includes information about layers in the plurality of layers that are potentially visible, wherein each layer that is potentially visible corresponds to a corresponding shader program permutation, and wherein each corresponding shader program permutation is optimized to sample only from those layers that are potentially visible; and
merging the shader program permutations together into a single permutation map.

10. The method of claim 9, wherein the method further includes:
extracting multiple guidance composition meshes from the single permutation map, wherein the multiple guidance composition meshes constitute the set of guidance composition meshes; and
using the multiple guidance composition meshes during the image composition process to compose the pixels from the specific image layer that is determined to be closest to the particular user while refraining from composing the pixels that are occluded by the composed pixels.

11. A computer system (500) comprising:
a processor system (505); and
a storage system (510) that stores instructions that are executable by the processor system to cause the computer system to perform any one of the preceding method claims.

12. The computer system of claim 11, wherein the LSR is performed separately on each of the image layers.

13. A head mounted device 'HMD' (110) comprising:
a processor system (505); and
a storage system (510) that stores instructions that are executable by the processor system to cause the HMD to perform any one of the preceding method claims.

14. The HMD of claim 13, wherein the image composition process generates a hologram comprising a virtual desktop slate.

15. The HMD of claim 13 or claim 14, wherein the plurality of image layers are received over a network connection from a cloud service.

## Patentansprüche

1. Verfahren (400) zum Durchführen einer gekachelten Zusammensetzung, um intelligent einzuschränken, welche Schichten beim Durchführen eines Bildzusammensetzungsprozesses in Betracht gezogen werden, wobei das Verfahren Folgendes umfasst:
Zugreifen (405), für jede Bildschicht in einer Vielzahl von Bildschichten, auf ein entsprechendes Farbbild (125) und ein entsprechendes Tiefenbild (130), sodass auf mehrere Farbbilder und mehrere Tiefenbilder zugegriffen wird;
Durchführen (410) von Spätphasenreprojektion, "LSR", an der Vielzahl von Bildschichten, um entsprechende reprojizierte Farbbilder und entsprechende reprojizierte Tiefenbilder (220) zu produzieren, wobei die LSR unter Verwendung einer Korrekturmatrix durchgeführt wird;
Verwenden (415) der Korrekturmatrix, die während der Durchführung der LSR verwendet wird, um einen Satz von Leitzusammensetzungsgittern zu erzeugen, die dazu agieren, um einzuschränken, welche Bildschichten in der Vielzahl von Bildschichten für einen nachfolgenden Bildzusammensetzungsprozess (225) in Betracht gezogen werden, wobei die Bildschichten, die für den nachfolgenden Bildzusammensetzungsprozess in Betracht gezogen werden, einen Satz ausgewählter Bildschichten bilden; und
Verwenden (420) des Satzes von Leitzusammensetzungsgittern, um die Durchführung des Bildzusammensetzungsprozesses zu leiten, wobei das Leiten der Durchführung des Bildzusammensetzungsprozesses Auswählen eines oder mehrerer Shader zur Verwendung während des Bildzusammensetzungsprozesses beinhaltet, wobei der Bildzusammensetzungsprozesses Zusammensetzen von Pixeln aus einer spezifischen Bildschicht, die in dem Satz von ausgewählten Bildschichten beinhaltet ist, beinhaltet, während vom Zusammensetzen von Pixeln, die durch die zusammengesetzten Pixel verdeckt sind, abgesehen wird, und wobei die spezifische Bildschicht eine ist, für die bestimmt wird, dass sie sich am dichtesten an einem konkreten Benutzer befindet.

2. Verfahren nach Anspruch 1, wobei sich Auflösungen der mehreren Farbbilder von Auflösungen der mehreren Tiefenbilder unterscheiden.

3. Verfahren nach Anspruch 2, wobei eine Auflösung einer konkreten Bildtiefe die Hälfte einer Auflösung eines konkreten Farbbilds beträgt.

4. Verfahren nach einem der vorhergehenden Ansprüche, wobei das Erzeugen des Satzes von Leitzusammensetzungsgittern, die dazu agieren, um einzuschränken, welche Bildschichten in der Vielzahl von Bildschichten für den nachfolgenden Bildzusammensetzungsprozess in Betracht gezogen werden, Durchführen eines Quellkachelextraktionsvorgangs beinhaltet, der einen Satz von Quellraumkacheln produziert, wobei der Quellkachelextraktionsvorgang Trennen jeder Bildschicht der Vielzahl von Bildschichten in einen Satz von nicht überlappenden Kacheln beinhaltet.

5. Verfahren nach Anspruch 4, wobei der Quellkachelextraktionsvorgang ferner Scannen von Tiefenpixeln der Tiefenbilder, die jeder der nicht überlappenden Kacheln zugeordnet sind, und Bestimmen einer Mindesttiefe und einer Maximaltiefe für jede nicht überlappende Kachel beinhaltet.

6. Verfahren nach Anspruch 5, wobei der Quellkachelextraktionsvorgang ferner Bestimmen einer Inhaltsabdeckung für Pixel in jeder der nicht überlappenden Kacheln beinhaltet.

7. Verfahren nach Anspruch 6, wobei der Satz von nicht überlappenden Kacheln unter Verwendung der Korrekturmatrix, die während der Durchführung der LSR verwendet wurde, reprojiziert wird und wobei die Reprojektion durch Reprojizieren jeder Kachel in dem Satz von nicht überlappenden Kacheln basierend auf der Mindesttiefe und der Maximaltiefe der Kachel unter Verwendung der Korrekturmatrix durchgeführt wird.

8. Verfahren nach Anspruch 7, wobei das Verfahren ferner Folgendes beinhaltet:
Durchführen von Verdeckungsentfernung an dem Satz von nicht überlappenden Kacheln durch Bestimmen, ob eine konkrete Kachel in dem Satz von nicht überlappenden Kacheln ein potentieller Verdecker für andere Kacheln ist, die sich hinter der konkreten Kachel befinden, wobei, für Kacheln, die vollständig durch die konkrete Kachel verdeckt sind, diese verdeckten Kacheln durch Beseitigen dieser aus der Betrachtung während des Bildkompositionsprozesses entfernt werden.

9. Verfahren nach Anspruch 8, wobei das Verfahren ferner Folgendes beinhaltet:
Zusammenführen von Informationen über eine oder mehrere der Bildschichten, um einen Satz von Bildschirmkacheln zu erschaffen, wobei jede der Bildschirmkacheln Informationen über Schichten in der Vielzahl von Schichten beinhaltet, die potentiell sichtbar sind, wobei jede Schicht, die potentiell sichtbar ist, einer entsprechenden Shader-Programmpermutation entspricht und wobei jede entsprechende Shader-Programmpermutation dazu optimiert ist, nur die Schichten abzutasten, die potentiell sichtbar sind; und
Zusammenführen der Shader-Programmpermutationen gemeinsam in eine einzige Permutationskarte.

10. Verfahren nach Anspruch 9, wobei das Verfahren ferner Folgendes beinhaltet:
Extrahieren mehrerer Leitzusammensetzungsgitter aus der einzigen Permutationskarte, wobei die mehreren Leitzusammensetzungsgitter den Satz von Leitzusammensetzungsgittern bilden; und
Verwenden der Leitzusammensetzungsgitter während des Bildzusammensetzungsprozesses, um die Pixel aus der spezifischen Bildschicht zusammenzusetzen, für die bestimmt ist, dass sie sich am dichtesten an dem konkreten Benutzer befindet, während davon abgesehen wird, die Pixel zusammenzusetzen, die durch die zusammengesetzten Pixel verdeckt werden.

11. Computersystem (500), umfassend:
ein Prozessorsystem (505); und
ein Speichersystem (510), das Anweisungen speichert, die durch das Prozessorsystem ausführbar sind, um das Computersystem dazu zu veranlassen, einen beliebigen der vorhergehenden Verfahrensansprüche durchzuführen.

12. Computersystem nach Anspruch 11, wobei die LSR getrennt an jeder der Bildschichten durchgeführt wird.

13. Am Kopf tragbare Vorrichtung "HMD" (110), umfassend:
ein Prozessorsystem (505); und
ein Speichersystem (510), das Anweisungen speichert, die durch das Prozessorsystem ausführbar sind, um die HMD dazu zu veranlassen, einen beliebigen der vorhergehenden Verfahrensansprüche durchzuführen.

14. HMD nach Anspruch 13, wobei der Bildzusammensetzungsprozess ein Hologramm erzeugt, dass eine virtuelle Desktop-Tafel umfasst.

15. HMD nach Anspruch 13 oder Anspruch 14, wobei die Vielzahl von Bildschichten über eine Netzwerkverbindung von einem Cloud-Dienst empfangen wird.

## Revendications

1. Procédé (400) pour réaliser une composition carrelée afin de restreindre intelligemment les couches prises en compte lors de la réalisation d'un processus de composition d'image, ledit procédé comprenant :
l'accès (405), pour chaque couche d'image dans une pluralité de couches d'image, à une image de couleur correspondante (125) et à une image de profondeur correspondante (130) de sorte que de multiples images de couleur et de multiples images de profondeur soient accessibles ;
la réalisation (410) d'une reprojection de stade tardif « LSR » sur la pluralité de couches d'image pour produire des images de couleur reprojetées correspondantes et des images de profondeur reprojetées correspondantes (220), dans lequel la LSR est réalisée à l'aide d'une matrice de correction ;
l'utilisation (415) de la matrice de correction utilisée lors de la réalisation de la LSR pour générer un ensemble de maillages de composition de guidage qui servent à restreindre les couches d'image, parmi la pluralité de couches d'image, qui sont prises en compte pour un processus de composition d'image ultérieur (225), dans lequel les couches d'image prises en compte pour le processus de composition d'image ultérieur forment un ensemble de couches d'image sélectionnées ; et
l'utilisation (420) de l'ensemble de maillages de composition de guidage pour guider la réalisation du processus de composition d'image, dans lequel le guidage de la réalisation du processus de composition d'image comporte la sélection d'un ou plusieurs nuanceurs à utiliser pendant le processus de composition d'image, dans lequel le processus de composition d'image comporte la composition de pixels à partir d'une couche d'image spécifique incluse parmi l'ensemble de couches d'image sélectionnées tout en s'abstenant de composer des pixels qui sont occlus par les pixels composés, et dans lequel la couche d'image spécifique est celle qui est déterminée comme étant la plus proche d'un utilisateur particulier.

2. Procédé selon la revendication 1, dans lequel les résolutions des multiples images de couleur sont différentes des résolutions des multiples images de profondeur.

3. Procédé selon la revendication 2, dans lequel une résolution d'une image de profondeur particulière est la moitié d'une résolution d'une image de couleur particulière.

4. Procédé selon l'une quelconque des revendications précédentes, dans lequel la génération de l'ensemble de maillages de composition de guidage qui servent à restreindre les couches d'image, parmi la pluralité de couches d'image, qui sont prises en compte pour le processus de composition d'image ultérieur comporte la réalisation d'une opération d'extraction de carreau source qui produit un ensemble de carreaux d'espace source, dans lequel ladite opération d'extraction de carreau source comporte la division de chaque couche d'image parmi la pluralité de couches d'image en un ensemble de carreaux non superposés.

5. Procédé selon la revendication 4, dans lequel l'opération d'extraction de carreau source comporte en outre la numérisation des pixels de profondeur des images de profondeur attribuées à chacun des carreaux non superposés et la détermination d'une profondeur minimale et d'une profondeur maximale pour chacun desdits carreaux non superposés.

6. Procédé selon la revendication 5, dans lequel l'opération d'extraction de carreau source comporte en outre la détermination d'une couverture de contenu pour les pixels dans chacun des carreaux non superposés.

7. Procédé selon la revendication 6, dans lequel l'ensemble de carreaux non superposés est reprojeté à l'aide de la matrice de correction utilisée lors de la réalisation de la LSR, et dans lequel ladite reprojection est réalisée en reprojetant chaque carreau de l'ensemble de carreaux non superposés sur la base de la profondeur minimale et de la profondeur maximale de ce carreau à l'aide de la matrice de correction.

8. Procédé selon la revendication 7, dans lequel le procédé comporte en outre :
la réalisation d'une élimination d'occlusions sur l'ensemble de carreaux non superposés en déterminant si un carreau particulier de l'ensemble de carreaux non superposés est un occluseur potentiel pour d'autres carreaux qui se trouvent derrière ledit carreau particulier, dans lequel, pour les carreaux qui sont entièrement occlus par le carreau particulier, ces carreaux occlus sont éliminés en les retirant de la considération lors du processus de composition de l'image.

9. Procédé selon la revendication 8, dans lequel le procédé comporte en outre :
la fusion des informations sur une ou plusieurs des couches d'image pour créer un ensemble de carreaux d'écran, dans lequel chacun des carreaux d'écran comporte des informations sur les couches parmi la pluralité de couches potentiellement visibles, dans lequel chaque couche potentiellement visible correspond à une permutation de programme de nuanceur correspondante, et dans lequel chaque permutation de programme de nuanceur correspondante est optimisée pour échantillonner uniquement à partir de ces couches potentiellement visibles ;
la fusion des permutations de programme de nuanceur en une carte de permutation unique.

10. Procédé selon la revendication 9, dans lequel le procédé comporte en outre :
l'extraction de multiples maillages de composition de guidage à partir de la carte de permutation unique, dans lequel les multiples maillages de composition de guidage constituent l'ensemble de maillages de composition de guidage ; et
l'utilisation des multiples maillages de composition de guidage pendant le processus de composition d'image pour composer les pixels à partir de la couche d'image spécifique qui est déterminée comme étant la plus proche de l'utilisateur particulier tout en s'abstenant de composer les pixels qui sont occlus par les pixels composés.

11. Système informatique (500), comprenant :
un système de processeur (505) ; et
un système de stockage (510) stockant des instructions exécutables par le système de processeur pour amener le système informatique à réaliser l'une quelconque des revendications précédentes du procédé.

12. Système informatique selon la revendication 11, dans lequel la LSR est réalisée séparément sur chacune des couches d'image.

13. Dispositif monté sur la tête « HMD » (110) comprenant :
un système de processeur (505) ; et
un système de stockage (510) stockant des instructions exécutables par le système de processeur pour amener le HMD à réaliser l'une quelconque des revendications précédentes du procédé.

14. HMD selon la revendication 13, dans lequel le processus de composition d'image génère un hologramme comprenant une tablette de bureau virtuel.

15. HMD selon la revendication 13 ou la revendication 14, dans lequel la pluralité de couches d'image sont reçues via une connexion réseau à partir d'un service en nuage.
